# EUROPEAN PATENT APPLICATION

(11) **EP 4 832 328 A1**
(43) Date of publication of application: **28.10.2026**
(21) Application number: 24908201.7
(22) Date of filing: 20.12.2024
(51) Int. Cl.: H02M 3/335, H02M 1/00, H02M 1/08

(54) **POWER CONVERSION DEVICE**

(30) Priority: 20.12.2023 KR 20230187704; 17.12.2024 KR 20240188891
(71) Applicant: LG Innotek Co., Ltd., Seoul 07796 (KR)
(72) Inventor: YOON, Dong Keun, Seoul 07796 (KR)
(74) Representative: Plasseraud IP
(86) International application number: PCT/KR2024/020901
(87) International publication number: WO 2025/135919

(57) **Abstract**

A power conversion device according to an embodiment of the present invention comprises: an high-side switch and a first diode connected in series; a second diode and a low-side switch connected in series; a first transformer unit connected to a first node between the high-side switch and the first diode and to a second node between the second diode and the low-side switch; a third diode connected in series with an output side of a second transformer unit; and a balancing unit which is connected in parallel with the second diode, and balances a drain-source voltage of the high-side switch and a drain-source voltage of the low-side switch.

## Description

### [Technical Field]

The present invention relates to a power conversion device, and more particularly, to a power conversion device including a voltage balancing circuit between switches.

### [Background Art]

A rapid charger for charging an electric vehicle configures power modules with a capacity of tens of kW in parallel and outputs a large capacity of power in order to support high-speed charging of several hundred kW. When connected to the electric vehicle, the power module receives AC power from a grid and outputs DC power for charging a battery of the electric vehicle.

A power module may include various types of converters, and a flyback converter may be used. When switches of the flyback converter are operated simultaneously, voltage inequality between the switches may occur, and heat generation may be concentrated on one switch, which leads to a problem of causing damage to components.

### [Detailed Description of the Invention]

### [Technical Subject]

A technical subject to be solved by the present invention is to provide a power conversion device including a voltage balancing circuit between switches.

### [Technical Solution]

To solve the technical subject, a power conversion device according to an embodiment of the present invention comprises: a high-side switch and a first diode connected in series; a second diode and a low-side switch connected in series; a first transformer unit connected to a first node between the high-side switch and the first diode and to a second node between the second diode and the low-side switch; a third diode connected in series with an output side of the first transformer unit; and a balancing unit which is connected in parallel with the second diode, and balances the drain-source voltage of the high-side switch and the drain-source voltage of the low-side switch.

In addition, the balancing unit may include a first capacitor connected in parallel with the second diode.

In addition, the balancing unit may compensate for the third capacitance value obtained by subtracting the second parasitic capacitance value between the other input terminal and the ground from the first parasitic capacitance value between one of two input terminals of an input part of the first transformer unit and the ground.

In addition, the capacitance of the first capacitor may correspond to the third capacitance value.

In addition, the high-side switch and the low-side switch may be simultaneously turned on and off.

In addition, the power conversion device includes a first heat sink configured to dissipate heat of the high-side switch to the outside and a second heat sink configured to dissipate heat of the low-side switch to the outside, and the ground of the first heat sink and the ground of the second heat sink may correspond to the ground connected to the low-side switch.

In addition, the power conversion device includes a driving power supply unit configured to supply gate power to the high-side switch and the low-side switch, and the driving power supply unit includes: a first gate driver circuit configured to generate the gate power of the high-side switch; a second gate driver circuit configured to generate the gate power of the low-side switch; and a second transformer unit connected to the first gate driver circuit and the second gate driver circuit, wherein the second transformer unit may include a primary side connected to a controller and two output sides on a secondary side respectively connected to the first gate driver circuit and the second gate driver circuit.

In addition, a primary side and a secondary side of the first transformer unit may be insulated, and the primary side and the secondary side of the second transformer unit may be insulated.

In addition, the first heat sink and the high-side switch may be insulated, and the second heat sink and the low-side switch may be insulated.

In addition, the power conversion device may include an input-side capacitor connected in parallel with the high-side switch and the first diode, and an output-side capacitor connected in parallel with the third diode.

In addition, the power conversion device may be a flyback converter.

To solve the technical subject, a power conversion device according to an embodiment of the present invention comprises: a high-side switch and a first diode connected in series; a second diode and a low-side switch connected in series; a first transformer unit connected to a first node between the high-side switch and the first diode and to a second node between the second diode and the low-side switch; a third diode connected in series with an output side of the second transformer unit; and a first capacitor connected in parallel with the second diode.

### [Advantageous Effects]

According to embodiments of the present invention, voltage balancing between switches is achieved, thereby preventing damage to components.

### [Brief Description of Drawings]

FIG. 1 illustrates a power conversion device according to an embodiment of the present invention.

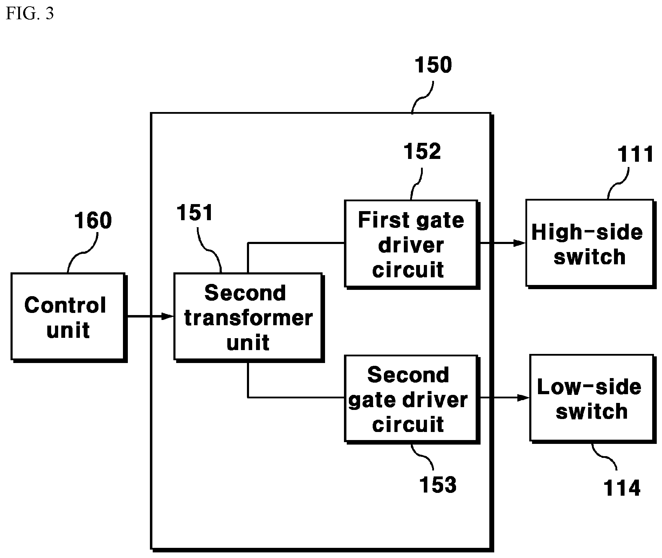

FIG. 2 to FIG. 4 are block diagrams of a power conversion device according to an embodiment of the present invention.
FIG. 5 is a circuit implementation example of a power conversion device according to an embodiment of the present invention.
FIG. 6 is a view for explaining voltage balancing of a power conversion device according to an embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the embodiments of the present invention are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

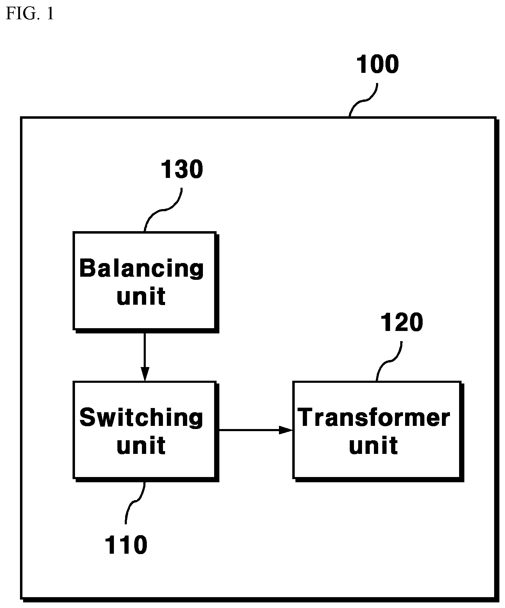

FIG. 1 illustrates a power conversion device according to an embodiment of the present invention. A power conversion device **100** according to an embodiment of the present invention consists of a switching unit **110**, a transformer unit **120**, and a balancing unit **130**, and may include a driving power supply unit **150**, a controller **160**, and heat sinks **171** and **172**.

A power conversion device **100** according to an embodiment of the present invention may be a power conversion device of an electric vehicle charging apparatus. Here, the power conversion device **100** may be mounted on a power module of the electric vehicle charging apparatus. The power module may receive AC power from a grid (50/60 Hz), convert it into DC power for charging an electric vehicle battery, and output the DC power. Alternatively, the power module may receive DC power from an energy storage system (ESS), convert it into DC power for charging a battery, and output the DC power. Power may be received from an external power source such as a solar power generation module. The power conversion device **100** according to an embodiment of the present invention may be an isolated converter and may be a converter that generates auxiliary power of an inverter module.

An input is provided to the transformer unit **120** through a switching operation of the switching unit **110**, and power input to the transformer unit **120** may be converted and output. The switching unit **110** includes a plurality of switches, and the balancing unit **130** may be connected to the switching unit **110** to resolve voltage imbalance between the plurality of switches. The balancing unit **130** may balance voltages between the switches by compensating for a difference in parasitic capacitance values between the switches of the switching unit **110**.

The switching unit **110** may include a high-side switch **111**, a low-side switch **114**, a first diode **112**, and a second diode **113**.

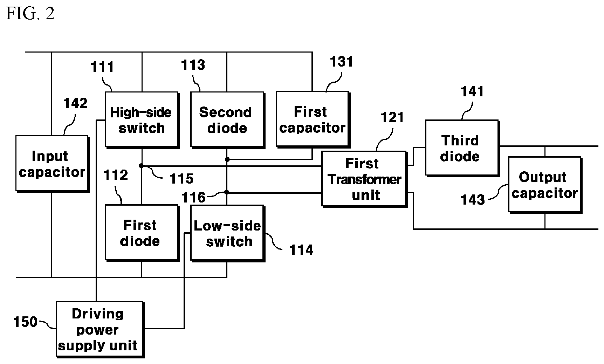

The high-side switch **111** and the first diode **112** may be connected in series, and the second diode **113** and the low-side switch **114** may be connected in series. As shown in FIG. 2, the high-side switch **111** and the low-side switch **114** may be connected in parallel to an input part where power is input, and may be connected in series with the first diode **112** and the second diode **113**, respectively. An input capacitor **142** may be connected in parallel to the input part.

One end of the high-side switch **111** may be connected to the input part, and the other end may be connected to the first diode **112**. The first diode **112** may have a cathode connected to the high-side switch **111** and an anode connected to the ground. Here, the ground is a ground of the power conversion device **100**, and may be a ground of the device having the lowest potential in the power conversion device **100** or in an apparatus where the power conversion device **100** is mounted.

The low-side switch **114** may be connected in parallel with the high-side switch **111** but connected in series with the second diode **113**. The second diode **113** may have a cathode connected to the input part and an anode connected to the low-side switch **114**. The low-side switch **114** may have one end connected to the anode of the second diode and the other end connected to the ground.

The transformer unit **120** is connected to the switching unit **110** and may receive power from the switching unit **110**. The transformer unit **120** may include a first transformer unit **121**. The first transformer unit **121** may be a transformer, and may be an isolated transformer in which a primary side and a secondary side of the first transformer unit **121** are isolated from each other.

A primary side of the first transformer unit **121** may be connected to a first node **115** and a second node **116**. The first node **115** may be a node between the high-side switch **111** and the first diode **112**, and the second node **116** may be a node between the second diode **113** and the low-side switch **114**. A primary-side (+) input terminal of the first transformer unit **121** may be connected to the first node **115**, and a primary-side (-) input terminal of the first transformer unit **121** may be connected to the second node **116**.

A secondary side, which is an output side of the first transformer unit **121**, may be connected to a third diode **141**. The third diode **141** may be connected in series with a secondary-side (+) output terminal of the first transformer unit **121**. An output capacitor **143** may be connected in parallel to an output part.

At least a portion of an on-state time or an off-state time of the high-side switch **111** and the low-side switch **114** may overlap. The high-side switch **111** and the low-side switch **114** may be turned on and turned off simultaneously. The high-side switch **111** and the low-side switch **114** may include MOSFET switches, and may be MOSFET switches including diodes. In addition, they may be various other semiconductor switches.

A power conversion device **100** according to an embodiment of the present invention may be a two-switch flyback converter including a high-side switch **111** and a low-side switch **114**.

When the high-side switch **111** and the low-side switch **114** are turned on, a path of high-side switch **111** - first transformer unit **121** - low-side switch **114** is formed, such that power may be supplied to the first transformer unit **121** via the high-side switch **111**. At this time, since the first diode **112** and the second diode **113** are connected in a reverse direction, power is not connected to the first diode **112** and the second diode **113**.

When the high-side switch **111** and the low-side switch **114** are turned off, a path is formed in the direction from first diode **112** to first transformer unit **121** and then to second diode **113**. Through the two diodes, leakage energy is recycled to the input side to eliminate clamping losses, thereby increasing efficiency and reducing thermal stress, while simultaneously clamping the maximum voltage stress of the power MOSFET to the input voltage.

The driving power supply unit **150** may control on-off operations by supplying driving power to the high-side switch **111** and the low-side switch **114**. The high-side switch **111** and the low-side switch **114** may be MOSFET switches, and the driving power supply unit **150** may include a gate driver that supplies power to gates of the MOSFET switches. The high-side switch **111** and the low-side switch **114** may simultaneously receive gate power from the driving power supply unit **150**.

The driving power supply unit **150** may include a second transformer unit **151**, a first gate driver circuit **152**, and a second gate driver circuit **153**. The second transformer unit **151** may receive a gate driving signal from the controller **160**, and the second transformer unit **151** may provide the corresponding signal to the first gate driver circuit **152** and the second gate driver circuit **153**, respectively. The first gate driver circuit **152** and the second gate driver circuit **153** may generate and supply gate power for the high-side switch **111** and the low-side switch **114**, respectively. At this time, the second transformer unit **151** may be an isolated transformer, and may be an isolated transformer in which a secondary side has two output parts. The second transformer unit **151** may be an isolated transformer in which a primary side and a secondary side are isolated from each other.

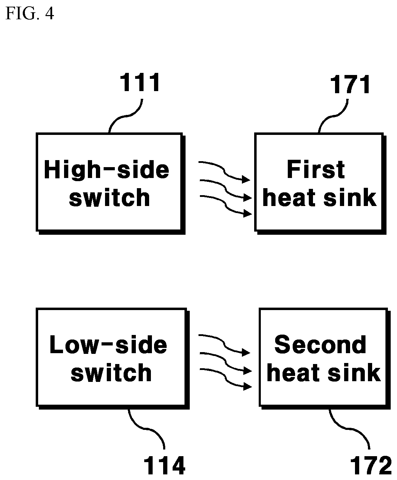

The heat sink may include a first heat sink **171** and a second heat sink **172**. As shown in FIG. 4, the first heat sink **171** may dissipate heat from the high-side switch **111** to the outside, and the second heat sink **172** may dissipate heat from the low-side switch **114** to the outside. The high-side switch **111** and the low-side switch **114** may be MOSFET switches and may generate a significant amount of heat during operation; to dissipate the heat generated from the switches, they may be disposed to contact the first heat sink **171** and the second heat sink **172**, respectively. At this time, the first heat sink **171** and the high-side switch **111** may be insulated, and the second heat sink **172** and the low-side switch **114** may be insulated. The heat sink may be formed of a metal with high thermal conductivity, and the heat sink may be insulated to prevent a short circuit with the high-side switch **111** or the low-side switch **114**. The first heat sink **171** and the second heat sink **172** may be connected to a ground, and the ground of each heat sink may correspond to a ground connected to the low-side switch **114**. Through this, safe operation is possible.

The high-side switch **111** and the low-side switch **114** are simultaneously turned on and off; however, when the high-side switch **111** and the low-side switch **114** are turned off, a voltage imbalance may occur between a drain-source voltage of the high-side switch **111** and a drain-source voltage of the low-side switch **114** due to parasitic components of insulation parts. Parasitic components may be generated by the insulation of the first transformer unit **121**, the second transformer unit **151**, the first heat sink **171**, and the second heat sink **172**. While the low-side switch **114** is connected to the ground, the high-side switch **111** is not directly connected to the ground, which may cause a voltage imbalance between the drain-source voltage of the high-side switch **111** and the drain-source voltage of the low-side switch **114**. Since the high-side switch **111** is not connected to the ground, a potential difference according to the on-off operations increases. As a result, even if the high-side switch **111** and the low-side switch **114** are simultaneously turned off, the drain-source voltage of the high-side switch **111** may be greater than the drain-source voltage of the low-side switch **114**, and a change in the drain-source voltage of the high-side switch **111** may be greater than a change in the drain-source voltage of the low-side switch **114**. Such voltage imbalance causes switching losses and generates heat in the high-side switch, which may lead to component damage.

The balancing unit **130** is connected to the switching unit **110** and may balance voltages between the switches of the switching unit **110**. The balancing unit **130** may balance the drain-source voltage of the high-side switch **111** and the drain-source voltage of the low-side switch **114**. To this end, the balancing unit **130** may be connected in parallel with the second diode **113**.

The balancing unit **130** may include a first capacitor **131**. The first capacitor **131** may be connected in parallel with the second diode **113**. As shown in FIG. 2, the first capacitor **131** is connected in parallel with the second diode **113** to compensate for a parasitic capacitor generated on the side of the high-side switch **111** connected in parallel with the second diode **113**, thereby evenly balancing the voltages between the high-side switch **111** and the low-side switch **114**. Here, the balanced voltages may be the drain-source voltage of the high-side switch **111** and the drain-source voltage of the low-side switch **114**.

The balancing unit **130** may compensate for a third capacitance value obtained by subtracting a second parasitic capacitance value between the other input terminal and the ground from a first parasitic capacitance value between one of two input terminals of the input part of the first transformer unit **121** and the ground. The total parasitic capacitance of the high-side switch **111** may be equal to the first parasitic capacitance value between the primary-side (+) input terminal of the first transformer unit **121** and the ground, and the total parasitic capacitance of the low-side switch **114** may be equal to the second parasitic capacitance value between the primary-side (-) input terminal of the first transformer unit **121** and the ground. That is, the difference between the parasitic capacitance of the high-side switch **111** and the parasitic capacitance of the low-side switch **114** is equal to the third capacitance value obtained by subtracting the second parasitic capacitance value from the first parasitic capacitance value. (C₃ = C_{eq_HS} - C_{eq_LS})

The balancing unit **130** may perform balancing by compensating for the third capacitance value. The balancing unit **130** may perform balancing by setting the capacitance of the first capacitor **131** to the third capacitance value. The first capacitor **131** is connected in parallel with the second diode **113**, which is connected to the low-side switch **114**, to compensate for the parasitic capacitance value of the low-side switch **114** so that it equals the parasitic capacitance value of the high-side switch **111**, thereby performing the balancing.

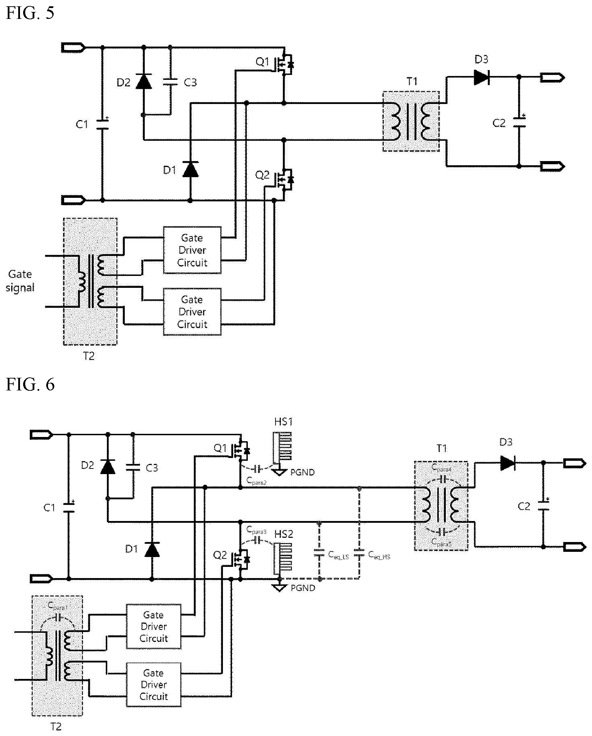

A power conversion device **100** according to an embodiment of the present invention may be implemented as shown in FIG. 5. It may include a high-side switch **Q1** and a first diode **D1** connected in series; a second diode **D2** and a low-side switch **Q2** connected in series; a first transformer unit **T1** connected to a first node between the high-side switch **Q1** and the first diode **D1** and to a second node between the second diode **D2** and the low-side switch **Q2**; a third diode **D3** connected in series with an output side of the first transformer unit **T1**; and a first capacitor **C3** connected in parallel with the second diode **D2**. It may also include an input capacitor **C1** and an output capacitor **C2**, and a second transformer unit **T2** that transmits gate signals to each gate driver circuit to drive the high-side switch **Q1** and the low-side switch **Q2**.

At this time, parasitic capacitances may occur due to insulation. The locations where parasitic capacitances occur may be as shown in FIG. 6. Specifically, Cₚₐᵣₐ₁ may occur in the second transformer unit **T2**, which is an isolated transformer; Cₚₐᵣₐ₂ may occur between the first heat sink **HS1** and the high-side switch **Q1**; Cₚₐᵣₐ₃ may occur between the second heat sink **HS2** and the low-side switch **Q2**; and Cₚₐᵣₐ₄ and Cₚₐᵣₐ₅ may occur in the first transformer unit **T1**. The total parasitic capacitance of the high-side switch **Q1** (C_{eq_HS}) may be equal to the first parasitic capacitance value between the primary-side (+) input terminal of the first transformer unit **T1** and the ground, and the total parasitic capacitance of the low-side switch **Q2** (C_{eq_LS}) may be equal to the second parasitic capacitance value between the primary-side (-) input terminal of the first transformer unit **T1** and the ground.

To balance the high-side switch **Q1** and the low-side switch **Q2**, a third capacitance value obtained by subtracting the second parasitic capacitance value from the first parasitic capacitance value is compensated for, and to this end, the capacitance value of the first capacitor **C3**, which is connected in parallel with the second diode **D2**, may be set to the third capacitance value. Through this, the difference between the drain-source voltage of the high-side switch **Q1** and the drain-source voltage of the low-side switch **Q2** can be reduced.

It was confirmed that while the difference between the drain-source voltage of the high-side switch **Q1** and the drain-source voltage of the low-side switch **Q2** was 63.23V (a 10.5% difference) with respect to 600V when the first capacitor **C3** was not connected in parallel to the second diode **D2**, the difference was reduced to 18.48V (a 3.08% difference) by connecting the first capacitor **C3** in parallel to the second diode **D2**.

By reducing the difference in drain-source voltage between the switches of the two-switch flyback converter, deviations in switching losses and heat generation can be minimized. Consequently, since the loss per unit component is reduced, the thermal design and component ratings can be optimized, and reliability for switching operations can be ensured.

Those of ordinary skill in the art to which the present embodiment pertains will understand that the embodiment may be implemented in modified forms without departing from the essential characteristics of the above description. Therefore, the disclosed methods should be considered from an explanatory perspective rather than a restrictive one. The scope of the present invention is defined by the claims rather than the foregoing description, and all differences within the equivalent scope should be interpreted as being included in the present invention.

## Claims

1. A power conversion device comprising:
a high-side switch and a first diode connected in series;
a second diode and a low-side switch connected in series;
a first transformer unit connected to a first node between the high-side switch and the first diode, and to a second node between the second diode and the low-side switch;
a third diode connected in series with an output side of the first transformer unit; and
a balancing unit connected in parallel with the second diode and configured to balance the drain-source voltage of the high-side switch and the drain-source voltage of the low-side switch.

2. A power conversion device according to claim 1,
wherein the balancing unit comprises a first capacitor connected in parallel with the second diode.

3. A power conversion device according to claim 2,
wherein the balancing unit is configured to compensate for a third capacitance value obtained by subtracting a second parasitic capacitance value between the other input terminal and a ground from a first parasitic capacitance value between one of two input terminals of an input part of the first transformer unit and the ground.

4. A power conversion device according to claim 3,
wherein a capacitance of the first capacitor corresponds to the third capacitance value.

5. A power conversion device according to claim 1,
wherein the high-side switch and the low-side switch are simultaneously turned on and off.

6. A power conversion device according to claim 1, comprising:
a first heat sink configured to dissipate heat from the high-side switch to the outside; and
a second heat sink configured to dissipate heat from the low-side switch to the outside,
wherein a ground of the first heat sink and a ground of the second heat sink correspond to a ground connected to the low-side switch.

7. The power conversion device according to claim 1, comprising:
a driving power supply unit configured to supply gate power to the high-side switch and the low-side switch,
wherein the driving power supply unit comprises:
a first gate driver circuit configured to generate gate power for the high-side switch;
a second gate driver circuit configured to generate gate power for the low-side switch; and
a second transformer unit connected to the first gate driver circuit and the second gate driver circuit, and
wherein the second transformer unit comprises:
a primary side connected to a controller, and
a secondary side comprising two output sides respectively connected to the first gate driver circuit and the second gate driver circuit.

8. The power conversion device according to claim 7,
wherein the primary side and the secondary side of the first transformer unit are insulated, and
wherein the primary side and the secondary side of the second transformer unit are insulated.

9. The power conversion device according to claim 8,
wherein the first heat sink and the high-side switch are insulated from each other, and
wherein the second heat sink and the low-side switch are insulated from each other.

10. The power conversion device according to claim 1, comprising:
an input-side capacitor connected in parallel with the high-side switch and the first diode; and
an output-side capacitor connected in parallel with the third diode.
